**Europäisches Patentamt**

**European Patent Office**

**Office européen des brevets**

(19)

(11) Veröffentlichungsnummer : **0 252 231**
**B1**

(12)                          **EUROPÄISCHE PATENTSCHRIFT**

(45) Veröffentlichungstag der Patentschrift :
28.06.89

(51) Int. Cl.⁴ : **F 02 B  37/12**

(21) Anmeldenummer : **87105939.0**

(22) Anmeldetag : **23.04.87**

(54) Vorrichtung zur Regelung des Ladedrucks eines Abgasturboladers.

(30) Priorität : 27.06.86 DE 3621641

(43) Veröffentlichungstag der Anmeldung :
13.01.88 Patentblatt 88/02

(45) Bekanntmachung des Hinweises auf die Patenterteilung : 28.06.89 Patentblatt 89/26

(84) Benannte Vertragsstaaten :
DE FR GB IT SE

(56) Entgegenhaltungen :
DE–A– 3 140 456
DE–A– 3 205 009
US–A– 4 235 076
PATENT ABSTRACTS OF JAPAN, Band 6, Nr. 201 (M-
163)[1079], 13. Oktober 1982; & JP-A-57 108 413
(HONDA GIKEN KOGYO K.K.) 06-07-1982
PATENT ABSTRACTS OF JAPAN, Band 8, Nr. 124 (M-
301)[1561], 9. Juni 1984; & JP-A-59 29 728 (MITSU-
BISHI DENKI K.K.) 17-02-1984
PATENT ABSTRACTS OF JAPAN, Band 10, Nr. 122
(M-476)[2179], 7. Mai 1986; & JP-A-60 249 618 (MAZDA
K.K.) 10-12-1985
PATENT ABSTRACTS OF JAPAN, Band 7, Nr. 265 (M-
258)[1410], 25. November 1983; & JP-A-58 144 627
(MITSUBISHI DENKI K.K.) 29-08-1983

(73) Patentinhaber : **Dr.Ing.h.c.  F.  Porsche  Aktiengesellschaft**
**Porschestrasse 42**
**D-7000 Stuttgart 40 (DE)**

(72) Erfinder : **Dorsch, Heinz, Dipl.-Ing.**
**Tulpenweg 10**
**D-7251 Weissach (DE)**

**Beschreibung**

Die Erfindung betrifft eine Vorrichtung zur Regelung des Ladedrucks eines aus Turbine und Verdichter bestehenden Abgasturboladers einer Brennkraftmaschine nach dem Oberbegriff des Anspruchs 1.

Eine derartige Vorrichtung ist in der DE-OS 32 05 009 beschrieben. Mit dem von der Brennkraftmaschine kommenden Abgasstrom wird die Turbine eines Abgasturboladers beaufschlagt, die ihrerseits einen Verdichter zur Förderung von Ladeluft für die Zylinder antreibt. In eine Abgas-Bypassleitung ist ein Bypassventil eingesetzt, durch dessen Öffnung der Abgasstrom ganz oder teilweise um die Turbinen herum unmittelbar der Abgasanlage zuführbar ist. Die Durchlaßöffnung des Bypassventils ist durch einen an einer Membran befestigten Ventilkörper steuerbar. Die Membran ist von der einen Seite durch eine Feder belastet, von der anderen Seite mit Steuerdruck beaufschlagt, der von einem elektromagnetischen Taktventil geliefert wird. Am Taktventil liegt einerseits Ladedruck der vom Verdichter geförderten Ladeluft und andererseits der Umgebungsdruck der in den Verdichter eintretenden Luft an.

Der Steuerdruck entsteht durch Mischung von Ladedruck und Umgebungsdruck. Bei Nullöffnung des Taktventils ist der Steuerdruck dem Ladedruck gleich, bei voller Öffnung ist der Steuerdruck gleich dem Umgebungsdruck. Das Öffnungs- und Schließzeitverhältnis des beispielsweise mit 15 Hz zwischen dem offenen und geschlossenen Zustand arbeitenden Taktventils wird von einem elektronischen Steuergerät variiert, mit dem die periodische Öffnungs- und Schließzeit des Taktventils in Abhängigkeit der in das Steuergerät eingehenden Signale für den Ladedruck, die Drehzahl und die Drosselklappenstellung der Brennkraftmaschine verändert wird.

Es ist die Aufgabe der Erfindung, eine derartige Steuervorrichtung so weiterzubilden, daß ihre Betriebssicherheit erhöht wird.

Zur Lösung dieser Aufgabe dienen die kennzeichnenden Merkmale des Anspruchs 1. Wenn zwei Steuerstränge aus je einem Taktventil und einem Steuergerät vorgesehen sind, die beide an das Bypassventil geschaltet sind, ist ein redundantes, die Betriebssicherheit erhöhendes Steuerungssystem geschaffen. Bei Ausfall des einen, gerade in Betrieb befindlichen Steuerungsstranges kann der andere seine Funktion übernehmen. Um zu vermeiden, daß beide Steuerstränge gemeinsam arbeiten, wodurch unerwünschte Überlagerungseffekte oder Regelungsschwingungen auftreten könnten, ist das Druckniveau, bei dem die Steuerungsstränge ansprechen, geringfügig unterschiedlich. Bei Normalbetrieb arbeitet nur der eine Steuerungsstrang, der auf das höhere Steuerdruckniveau ausgelegt ist. Dies wird in vorteilhafter Ausgestaltung der Erfindung erreicht, indem beide Taktventile über getrennte pneumatische Steuerdruckleitungen mit einem Umschaltventil verbunden sind, von dem eine gemeinsame Steuerdruckleitung zu dem Bypassventil führt. Durch den höheren Druck in der Steuerdruckleitung des Steuerungssystems, in dem Soll-Ladedruck erreicht ist, wird der Ventilkörper des Umschaltventils so bewegt, daß er die andere Steuerdruckleitung verschließt, wodurch der ihr zugeordnete Steuerstrang unwirksam wird.

Ein unterschiedliches Steuerdruckniveau läßt sich erreichen, indem entweder der in die Steuergeräte eingespeicherte Soll-Ladedruck oder der den Steuergeräten von Drucksensoren zugeführte Ist-Ladedruck unterschiedlich ist.

Ein Ausführungsbeispiel der Erfindung ist in der Zeichnung dargestellt und wird nachfolgend erläutert.

Mit dem aus einer Brennkraftmaschine 1 ausströmenden Abgas wird eine Turbine 2 beaufschlagt, die zusammen mit einem von ihr angetriebenen Verdichter 3 einen Abgasturbolader bildet. Vor der Turbine 2 zweigt eine Bypassleitung 4 ab, die hinter der Turbine 2 vor einem Abgasschalldämpfer 5 in die Abgasanlage einmündet. Der Volumenstrom der Bypassleitung wird durch ein in sie eingesetztes Bypassventil 6 gesteuert. Hierzu ist ein Ventilkörper 7 des Bypassventils mit einer Membran 8 verbunden, die an ihrer Oberseite mit dem aus einer Steuerdruckleitung 9 kommenden Steuerdruck beaufschlagt ist, an ihrer Unterseite durch eine Feder 10 belastet ist und mit einer Umgebungsdruckleitung 11 verbunden ist. Von dieser Umgebungsdruckleitung 11, die an die Saugseite des Verdichters 3 angeschlossen ist, führen zugleich auch Zweigleitungen zu einem ersten elektromagnetischen Taktventil 12 und einem zweiten elektromagnetischen Taktventil 13.

Druckseitig geht von dem Verdichter 3 eine zur Brennkraftmaschine führende Ladeluftleitung 14 ab, in die ein Ladeluftkühler 15, ein Luftmengenmesser 16 und eine Drosselklappe 17 in dieser Reihenfolge hintereinander eingesetzt sind. Zwischen dem Verdichter 3 und dem Ladeluftkühler 15 zweigt eine Ladedruckleitung 18 zum ersten Taktventil 12 und eine Ladedruckleitung 19 zu dem zweiten Taktventil 13 ab. In den Taktventilen 12, 13 wird zur Bildung des Steuerdrucks der Ladedruck mit Umgebungsdruck gemischt. Von dem einen Taktventil 12 führt eine Steuerdruckleitung 20, von dem anderen Taktventil 13 ebenfalls eine Steuerdruckleitung 21 zu einem Umschaltventil 22, das mit einer gemeinsamen Steuerdruckleitung 9 an die Oberseite der Membran 8 des Bypassventils 6 angeschlossen ist.

Die Taktventile 12, 13 haben eine Öffnungs-Schließ-Frequenz von ca. 10 bis 300 Hz. Die Takt-Periodendauer wird von zwei Steuergeräten 23, 24 festgelegt, von denen jeweils eines einem Taktventil 12 bzw. 13 zugeordnet ist und mit ihm durch eine Elektroleitung verbunden ist. Stromlos sind die Taktventile 12, 13 geschlossen. Im Schließzustand geben die Taktventile 12, 13 einen Steuerdruck ab, der dem Ladedruck gleich ist, bei 100 % Öffnung ist der abgegebene Steuerdruck gleich dem Umgebungsluftdruck.

In die Steuergeräte 23, 24 gehen Signale für die mit Sensoren 25, 26, 27 erfassten Werte der Drehzahl der Brennkraftmaschine sowie für den Ladedruck ein, wobei die Ladedrücke p11, p12 für jedes Steuergerät 23 bzw. 24 getrennt von einem Drucksensor 26 bzw. 27 erfasst werden. Der eine Drucksensor 26 ist unmittelbar hinter der Drosseklappe 17, der andere Drucksensor 27 weiter stromabwärts angeordnet und gibt einen um ca. 0,05 bar geringeren Ladedruck p12 an das zugehörige Steuergerät 24 ab. Entsprechend ist auch der vom Taktventil 13 gelieferte Steuerdruck geringfügig niederer als der Steuerdruck des anderen Taktventils 20. Durch den höheren Druck in der Steuerdruckleitung 20 wird das Umschaltventil 22 so geschaltet, daß die andere Steuerdruckleitung 21 verschlossen wird.

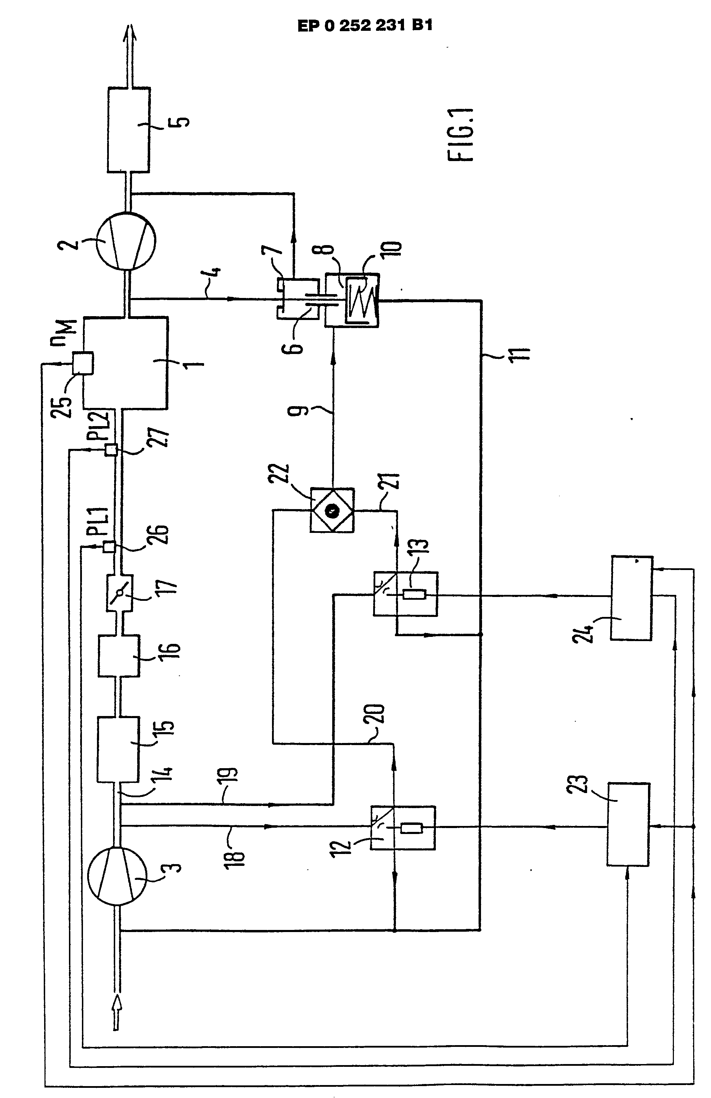

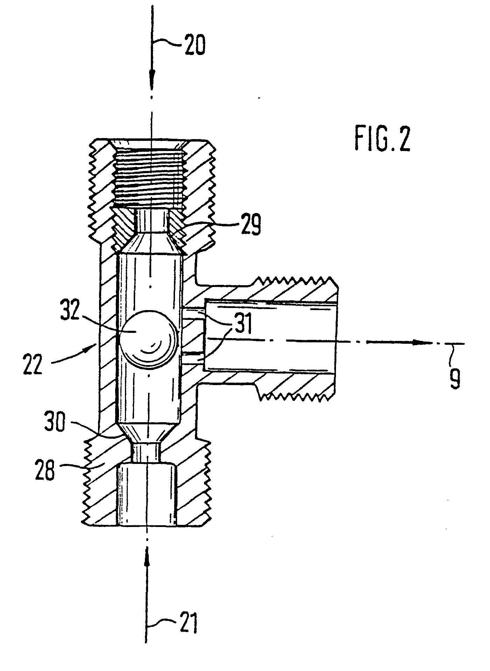

Die konstruktive Ausgestaltung des Umschaltventils 22 ist in Fig. 2 dargestellt. Ein als Gehäuse dienendes T-Stück 28 ist mit koaxialen Zuflußöffnungen, die Ventilsitze 29 und 30 enthalten, an die Steuerdruckleitung 20 und die Steuerdruckleitung 21 angeschlossen. Hierzu senkrechte Austrittsöffnungen 31 sind mit der Steuerdruckleitung 9 zum Bypaßventil 4 verbunden. Eine zwischen den Ventilsitzen 29 und 30 im T-Stück 28 längsgeführte Ventilkugel 32 legt sich abhängig vom beiderseitigen Drucknivau entweder an den einen oder anderen Ventilsitz an und macht damit den an ihn angeschlossenen Steuerstrang unwirksam.

## Patentansprüche

1. Vorrichtung zur Regelung des Ladedrucks eines aus Turbine (2) und Verdichter (3) bestehenden Abgasturboladers einer Brennkraftmaschine (1), mit einer zur Turbine (2) führenden Abgasleitung, einer von der Abgasleitung abzweigenden Bypaßleitung (4), die um die Turbine (2) herum in die von der Turbine (2) ausgehende Abgasanlage führt, einem von Steuerdruck beaufschlagten und gesteuerten Bypaßventil (6), über das die Bypaßleitung (4) zu öffnen und zu verschließen ist, so daß der von der Brennkraftmaschine (1) kommende Abgasstrom wahlweise über die Turbine (2) oder über die Bypaßleitung (4) in die Abgasanlage leitbar ist, und einem ersten Steuerstrang, umfassend ein erstes elektromagnetisches Taktventil (12), das sowohl an die Druckseite als auch an die Saugseite des Verdichters (3) angeschlossen ist, eine erste Steuerdruckleitung (20), über die das erste Taktventil (12) das Bypaßventil (6) mit Steuerdruck versorgt, und ein erstes Steuergerät (23), welches die Takt-Periodenlänge für das erste Taktventil (12) in Abhängigkeit von der Abweichung des von einem ersten Drucksensor (26) ermittelten Ist-Ladedrucks von einem im ersten Steuergerät (23) gespeicherten Soll-Ladedruck bestimmt, gekennzeichnet durch, einen dem ersten Steuerstrang im Aufbau entsprechenden und diesem parallel geschalteten zweiten Steuerstrang, bestehend aus einem zweiten Taktventil (13), einer zweiten Steuerdruckleitung (21) und einem zweiten Steuergerät (24), das mit einem zweiten Drucksensor (27) verbunden ist, wobei der Steuerdruck zur Steuerung des Bypaßventils (6) jeweils von einem der beiden Steuersträngen geliefert wird, während der andere Steuerstrang gesperrt ist, und daß der Steuerdruck des ersten Steuerstrangs sich vom Steuerdruck des zweiten Steuerstrangs unterscheidet.

2. Regelvorrichtung nach Anspruch 1, dadurch gekennzeichnet, daß der eine Steuerstrang (23, 12, 20) ein gerinfügig höheres Soll-Ladedruckniveau aufweist als der andere Steuerstrang (24, 13, 21).

3. Regelvorrichtung nach Anspruch 2, dadurch gekennzeichnet, daß die das Ladedruckniveau (p11 bzw. p12) messenden beiden Drucksensoren (26, 27) an unterschiedlichen Stellen längs der vom Verdichter (3) der Brennkraftmaschine sich erstreckenden Ladeluftleitung (14) angeordnet sind.

4. Regelvorrichtung nach Anspruch 1 und 2, dadurch gekennzeichnet, daß beide Taktventile (12, 13) über getrennte Steuerdruckleitungen (20, 21) an ein Umschaltventil (22) und von dort mit einer gemeinsamen Steuerdruckleitung (9) an das Bypaßventil (6) angeschlossen sind.

5. Regelvorrichtung nach Anspruch 4, dadurch gekennzeichnet, daß der mit dem niederern Soll-Ladedruck und dementsprechend höheren Steuerdruck beaufschlagte Steuerstrang den anderen Steuerstrang durch Betätigen des Umschaltventils (22) verschließt und so für die Ansteuerung des Bypaßventils (6) unwirksam macht.

6. Regelvorrichtung nach Anspruch 3 und 4, dadurch gekennzeichnet, daß die mit dem höheren Ladedruck (p11) und Steuerdruck beaufschlagte Steuerdruckleitung (20) die andere Steuerdruckleitung (21) durch Betätigen des Umschaltventils (20) verschließt.

7. Regelvorrichtung nach Anspruch 4, 5 oder 6, dadurch gekennzeichnet, daß als Umschaltventil (22) ein T-Stück (28) mit zwei koaxialen Ventilsitzen (29, 30) und einer dazu senkrechten Austrittsöffnung (31) verwendet ist, wobei die Ventilsitze (29 bzw. 30) mit den Steuerdruckleitungen (20 bzw. 21) in Verbindung stehen und durch eine Ventilkugel (32) wechselweise verschließbar sind.

## Claims

1. Supercharge pressure controller for an exhaust gas turbocharger of an internal combustion engine (1), said turbocharger comprising a turbine (2) and compressor (3), with a gas-exhaust pipe leading to the turbine (2), a by-pass pipe (4) branching from the gas-exhaust pipe, which pipe (4) leads around the turbine (2) into the gas-exhaust system issuing from the turbine (2), a by-pass valve (6) acted upon an controlled by the control pressure, by way of which valve the by-pass pipe (4) is to be opened and closed, so that the gas-exhaust stream coming from the internal combustion engine (1) can be guided selectively through the turbine (2) or by way of the by-pass pipe (4) into the gas-exhaust system and a first control line, comprising a first electromagnetic timing valve (12), which is connected both to the delivery side as well as to the intake side of the compressor (3), a first control pressure pipe (20), by which the first timing valve (12) supplies the by-pass valve (6) with control pressure and a first control unit (23), which determines the length of the timing period for the first timing valve (12) depending on the deviation of the actual supercharge pressure ascertained by a first pressure sensor (26) from a reference supercharge pressure memorised in the first control unit (23), characterised by a second control line corresponding in construction to the first control line and connected parallel thereto, comprising a second timing valve (13), a second control pressure pipe (21) and a second control unit (24), which is connected to a second pressure sensor (27), the control pressure for controlling the by-pass valve (6) being supplied respectively by one of the two control lines, whilst the other control line is blocked and that the control pressure of the first control line differs from the control pressure of the second control line.

2. Controller according to Claim 1, characterised in that one control line (23, 12, 20) has a slightly higher reference supercharge pressure level than the other control line (24, 13, 21).

3. Controller according to Claim 2, characterised in that the two pressure sensors (26, 27) measuring the supercharge pressure level (p11 or p12) are located at different points along the supercharger air pipe (14) extending from the compressor (3) of the internal combustion engine.

4. Controller according to Claims 1 and 2, characterised in that both timing valves (12, 13) are connected by way of separate control pressure pipes (20, 21) to a reversing valve (22) and from there by a common control pressure pipe (9) to the by-pass valve (6).

5. Controller according to Claim 4, characterised in that the control line acted upon by the lower reference supercharge pressure and correspondingly higher control pressure closes the other control line by actuating the reversing valve (22) and thus renders it inoperative for controlling the by-pass valve (6).

6. Controller according to Claims 3 and 4, characterised in that the control pressure pipe (20) acted upon by the higher supercharge pressure (p11) and control pressure closes the other control pressure pipe (21) by actuating the reversing valve (20).

7. Controller according to claims 4, 5 or 6, characterised in that a T-piece (28) with two coaxial valve seats (29, 30) and an outlet opening (31) perpendicular thereto is used as the reversing valve (22), the valve seats (29, 30) being connected to the control pressure pipes (20 or 21) and closable alternately by a valve ball (32).

**Revendications**

1. Dispositif pour la régulation de la pression à la sortie d'un turbocompresseur de suralimentation à gaz d'échappement pour moteur à combustion interne (1) se composant d'une turbine (2) et d'un compresseur (3), avec une conduite d'échappement allant à la turbine (2), une conduite de dérivation (4) partant de la conduite d'échappement, contournant la turbine (2) et aboutissant à l'installation d'évacuation des gaz d'échappement qui se trouve à la sortie de la turbine, une soupape de dérivation (6) au moyen de laquelle il est possible d'ouvrir et d'obturer la conduite de dérivation (4), de sorte que le flux de gaz d'échappement provenant du moteur à combustion interne (1) peut être dirigé vers l'évacuation soit à travers la turbine (2), soit à travers la conduite de dérivation (4), ainsi qu'un premier ensemble de commande comprenant une première soupape électromagnétique de cadencement (12) raccordée entre le côté refoulement et le côté aspiration du compresseur (3), une première tubulure pour la pression de commande (20) par laquelle la première soupape de cadencement (12) fournit la pression de commande à la soupape de dérivation (6) et un premier appareil de commande (23) qui détermine la durée des périodes de cadencement pour la première soupape de cadencement (12) en fonction de l'écart observé entre la pression de suralimentation effective déterminée au moyen d'un premier capteur de pression (26) et une valeur de consigne de la pression de suralimentation mise en mémoire dans ledit premier appareil de commande (23), caractérisé par le fait qu'il comprend un deuxième ensemble de commande, de structure analogue audit premier ensemble, comprenant une deuxième soupape de cadencement (13), une deuxième tubulure pour la pression de commande (21) et un deuxième appareil de commande (24) qui est relié à un deuxième capteur de pression (27), la pression de commande, pour actionner la soupape de dérivation (6) étant fournie à tout moment par l'un desdits ensembles de commande, tandis que l'autre ensemble de commande reste bloqué, et que la pression de commande fournie par le premier ensemble de commande est différente de celle qui est fournie par le deuxième ensemble de commande.

2. Dispositif de régulation selon la revendication 1, caractérisé par le fait que l'un des ensembles de commande (23, 12, 20) présente un niveau de consigne de la pression de suralimentation légèrement supérieur à celui du deuxième ensemble (24, 13, 21).

3. Dispositif de régulation selon la revendication 2, caractérisé par le fait que les deux capteurs manométriques (26, 27) qui mesurent le niveau effectif de la pression de suralimentation (PL1 et PL2) sont disposés en des points différents sur la longueur de la conduite d'air de suralimentation (14) qui s'étend à partir du compresseur du moteur à combustion interne.

4. Dispositif de régulation selon les revendications 1 et 2, caractérisé par le fait que les deux soupapes de cadencement (12, 13) sont reliées par des tubulures de pression de commandes séparées (20, 21) à une soupape d'inversion (22) et de là par une tubulure de pression de commande commune (9) à la soupape de dérivation (6).

5. Dispositif de régulation selon la revendication 4, caractérisé par le fait que l'ensemble de commande qui fonctionne avec la valeur de consigne la plus faible de la pression de suralimentation et qui fournit par conséquent la pression de commande la plus élevée, obture l'autre ensemble de commande en actionnant la soupape d'inversion (22) et neutralise par conséquent l'action de ce dernier sur la soupape de dérivation (6).

6. Dispositif de régulation selon les revendications 3 et 4, caractérisé par le fait que la tubulure de pression de commande (20) correspondant aux valeurs les plus élevées de la pression de suralimentation effective mesurée (PL1) et de la pression de commande, obture l'autre tubulure de pression de commande (21) en agissant sur la soupape d'inversion (22).

7. Dispositif de régulation selon les revendications 4, 5 ou 6, caractérisé par le fait que comme soupape d'inversion (22), on utilise une pièce en « T » (28) avec deux sièges de soupapes coaxiaux (29, 30) et un orifice de sortie (31) perpendiculaire à l'axe ainsi défini, les deux sièges de soupapes (29 et 30) étant reliés respectivement aux deux tubulures de pression de commande (20 et 21) et pouvant être obturés l'un ou l'autre par une bille de clapet (32).

FIG.1

EP 0 252 231 B1

FIG.2

20

29

32

22

31

9

30

28

21